# EUROPÄISCHE PATENTSCHRIFT

(11) **EP 1 221 007 B1**
(45) Veröffentlichungstag und Bekanntmachung des Hinweises auf die Patenterteilung: **16.04.2003**
(21) Anmeldenummer: 00969316.9
(22) Anmeldetag: 27.09.2000
(51) Int. Cl.: F16K 3/316, F16K 27/04

(54) **ABSPERRSCHIEBER**
STOP VALVE
ROBINET-VANNE

(30) Priorität: 14.10.1999 DE 19949513
(43) Veröffentlichungstag der Anmeldung: 10.07.2002
(73) Patentinhaber: KSB Aktiengesellschaft, 67227 Frankenthal (DE)
(72) Erfinder: KUBOTH, Hartmut, 91257 Pegnitz (DE)
(86) Internationale Anmeldenummer: EP0009436
(87) Internationale Veröffentlichungsnummer: WO01027505

(56) Entgegenhaltungen:
- EP-A- 0 447 707
- FR-A- 2 505 965
- US-A- 3 837 617
- US-A- 4 316 483
- US-A- 5 937 692

## Beschreibung

Die Erfindung betrifft einen Absperrschieber mit einem Gehäuse und einer Haube sowie einem in dem Gehäuse verschiebbar angeordneten Abschlußkörper, welcher eine oder zwei Dichtflächen trägt, die jeweils auf einem im Gehäuse befindlichen Sitzring zur dichtenden Anlage zu bringen sind, wobei der Abschlußkörper zwei seitliche Führungsleisten besitzt, welche mit entsprechend gestalteten, separat ausgebildeten, innerhalb des Gehäuses und der Haube formschlüssig gehalterten Führungsleisten in der Weise zusammenwirken, daß eine über den gesamten Verstellweg des Abschlußkörpers erfolgende gleitende Führung und eine Abstützung des Abschlußkörpers gegeben ist, wobei eine zusätzliche Halterung der Führungsleisten des Gehäuses mittels der Haube erfolgt. Die Führungsleisten des Abschlußkörpers und die mit diesen korrespondierenden Führungsleisten des Gehäuses müssen die auf den Abschlußkörper wirkenden Strömungskräfte und gegebenenfalls das Drehmoment der Spindel, mit welcher der Abschlußkörper auf- und abwärts bewegt wird, während des gesamten Verstellvorganges aufnehmen. Hierdurch kommt es zu einer von der Nennweite und der Druckdifferenz abhängigen Flächenpressung an den Schieberführungen. Da sich hieraus ein mehr oder weniger starker Verschleiß und sogar Schädigungen ergeben können, ist der Konstrukteur eines solchen Absperrschiebers genötigt, besondere Vorkehrungen zur Minimierung des Verschleißes und der Gefahr von Beschädigungen zu treffen. Dies geschieht vor allem durch die Wahl besonders widerstandsfähiger und verschleißbeständiger Werkstoffe für die Schieberführungen.

Um qualitativ möglichst hochwertige Werkstoffe für die Schieberführungen verwenden zu können, dabei aber den Aufwand für das Gehäuse nicht unnötig zu erhöhen, ging man schon sehr früh dazu über, die gehäuseseitigen Schieberführungen als separate Bauteile herzustellen und in das Gehäuse einzuschweißen. Dies hatte allerdings den Nachteil, daß sich bei dem letztlich doch unvermeidlichen Verschleiß an den Schieberführungen nur schwer Reparaturen durchführen ließen. Das galt vor allem für solche Armaturen, deren Gehäuse in eine Rohrleitung eingeschweißt war.

Durch die EP 0 587 595 B 1 wurde hier aber bereits Abhilfe geschaffen. Dies geschah mit Hilfe eines Rohrteils, das.die Führungsleisten für den Abschlußkörper trug. Das Rohrteil besaß einseitig offene Aussparungen, mit denen es die im Gehäuse befindlichen Sitzringe teilweise umgreifen konnte. Dadurch war es möglich, daß das Rohrteil mit den darin enthaltenen Führungsleisten in das Gehäuse eingeschoben und aus diesem herausgenommen werden konnte, sobald die Haube von dem Gehäuse entfernt war.

Um eine Austauschbarkeit der Führungsleisten des Gehäuses zu erreichen, beschreitet eine dem eingangs genannten Gattungsbegriff entsprechende Lösung einen anderen Weg. So werden bei der Ausführung der FR-A-2 505 965 als separate Teile ausgebildete, vom Gehäuse und dessen Haube formschlüssig aufgenommene Führungsleisten eingesetzt, die jeweils radial zum Abschlußkörper im Gehäuse angeordnet sind. Bei Entfernen der Haube werden die in den Ausführungsbeispielen der FR-A-2 505 965 als Stangen kreisförmigen Querschnitts dargestellten Führungsleisten frei. Sie können aus dem Gehäuse herausgezogen und gegebenenfalls durch Stangen mit gleichen Abmessungen ersetzt werden. Nachteilig ist die radial zur Durchflußrichtung des Absperrschiebers erfolgende Anordnung der Führungsleisten bzw. -stangen. Eine solche Anordnung führt wegen des den Leisten oder Stangen einzuräumenden Platzes zu einer Verbreiterung des Gehäuses. Dies ergibt sich in dem einen Fall dadurch, daß zur Vermeidung einer Schwächung einer die Führungseinrichtung aufnehmenden Gehäusewand die Wand verdickt werden muß, wodurch das Gehäuse breiter und schwerer wird. Soll dagegen die Führungseinrichtung von einer eigens In das Gehäuse eingesetzten Halterung getragen werden, muß für die Führungseinrichtung und deren Halterung Platz geschaffen werden.

Durch die Erfindung werden die genannten Nachteile dadurch vermieden, daß die Führungsleisten des Gehäuses jeweils von einer Kontur des Gehäuses und/oder des Sitzringes formschlüssig aufgenommen werden, die - in Durchflußrichtung des Absperrschiebers betrachtet - vor bzw. hinter dem Abschlußkörper vorgesehen ist. Das Gehäuse muß also zur Aufnahme der Führungsleisten nicht verbreitert werden.

Die Erfindung ist anwendbar bei alien Schiebern mit Führungsleisten, d.h. also insbesondere bei Keil-, Parallel-, und Regelschiebern.

Sind in dem Gehäuse des Absperrschiebers zwei Sitzringe angeordnet, auf denen der Abschlußkörper zur dichtenden Anlage zu bringen ist, so können die mit Profilierungen versehenen erfindungsgemäßen Führungsleisten von entsprechenden Profitierungen des Gehäuses und/oder der Sitzringe formschlüssig aufgenommen werden.

Handelt es sich aber um ein Gehäuse mit nur einem Sitzring, so können die als separate Teile ausgebildeten, mit Profilierungen versehenen Führungsleisten von entsprechenden Profilierungen des Gehäuses und/oder des Sitzringes und eines dem Sitzring gegenüberliegenden Gehäuseringes formschlüssig aufgenommen werden.

In Ausgestaltung der Erfindung wird vorgeschlagen, daß die Konturgebung der miteinander verbundenen Teile, wie Gehäuse, Sitzringe, Gehäusering und Führungsleisten, dem System von Nut und Feder entspricht.

Die Führungsleisten müssen nicht durchgehend die gleiche Form oder Kontur besitzen. Da die Führungsleisten eigentlich nur den der Führung dienenden Bereich überdecken müssen, braucht insbesondere oberhalb dieses Bereiches jeweils nur ein der Halterung in der Haube dienender Fortsatz vorhanden zu sein. Der formschlüssigen Halterung der Führungsleisten oder der Fortsätze kann dabei eine in der Haube angeordnete Ausnehmung dienen.

Schließlich wird noch vorgeschlagen, daß die formschlüssig mit den Sitzringen bzw. mit einem Sitzring und einem Gehäusering verbundenen Führungsleisten gleichzeitig der Halterung von austauschbar in das Gehäuse eingesetzten Sitzringen bzw. eines Sitzringes und eines Gehäuseringes dienen.

Anhand zweier Ausführungsbeispiele wird die Erfindung näher erläutert. Die Zeichnung zeigt zwei erfindungsgemäße Absperrschieber in drei Ansichten, wobei jeweils links einer senkrecht verlaufenden Mittellinie die erste Alternative und rechts der Mittellinie die zweite Alternative dargestellt ist. Im einzelnen zeigt die Zeichnung folgende Darstellungen:
- Fig. 1: ist ein Längsschnitt durch einen Absperrschieber.
- Fig. 2: ist ein in Höhe der Durchflußachse des Absperrschiebers der Fig. 1 verlaufender Teilschnitt (Schnittebene A-B).
- Fig. 3: ist ein gemäß der Schnittebene X-X bzw. Y-Y der Fig. 2 verlaufender Schnitt.
- Fig. 4: ist eine der Fig. 2 entsprechende Schnittdarstellung, wobei hier der Erfindungsgegenstand mit einer Ausführung verglichen wird, bei der ein austauschbares Rohrteil die Führungsleisten für einen Abschlußkörper trägt.

Die Absperrschieber beider Ausführungen besitzen ein Gehäuse 1, auf dem eine - nur teilweise dargestellte - Haube 2 mittels einer Schraubverbindung befestigt ist. In den Absperrschiebern sind zwei Verschlußteile 3 innerhalb eines durch eine Spindel 4 auf- und abwärts zu bewegenden Verschlußteilhalters 5 angeordnet. Der Verschlußteilhalter 5 besitzt seitlich angeformte Führungsleisten 6. Die Verschlußteile 3 und der Verschlußteilhalter 5 bilden zusammen den Abschlußkörper des Absperrschiebers.

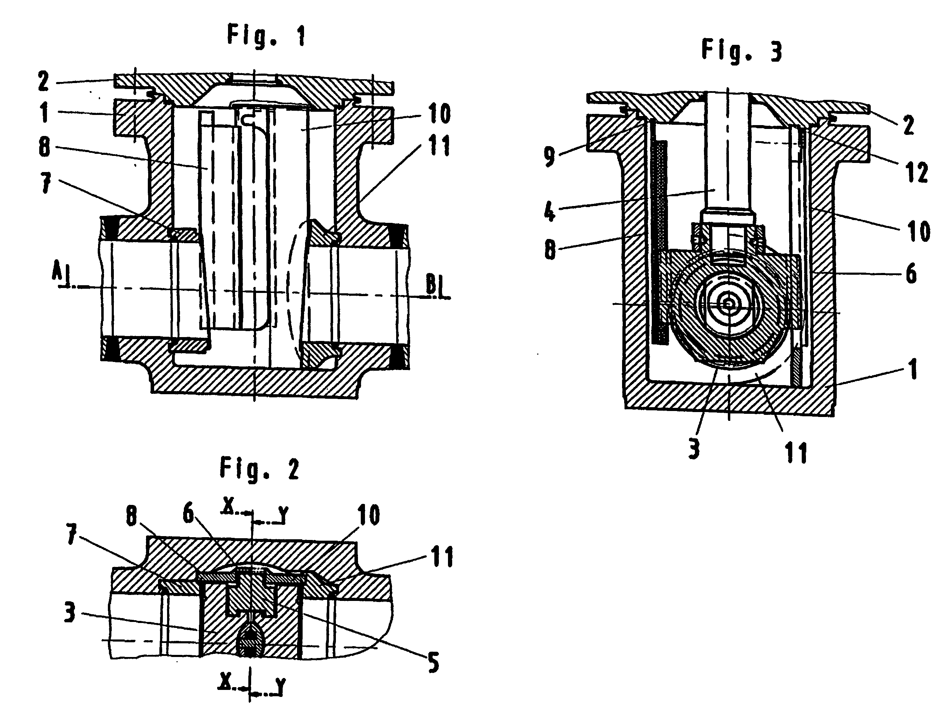

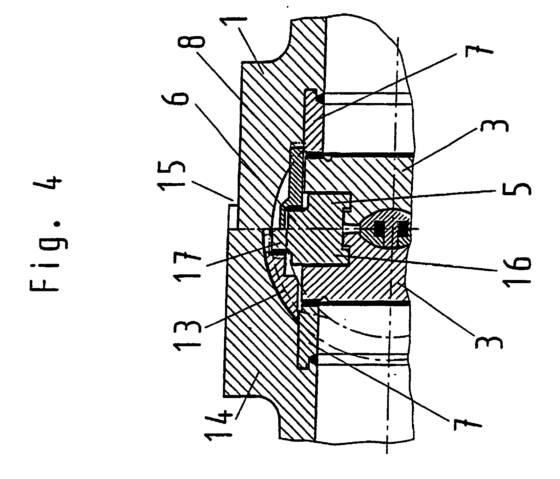

In dem Gehäuse 1 der ersten, in den Fig. 1 bis 3 jeweils links dargestellten Ausführung sind Sitzringe 7 vorgesehen, deren Dichtflächen mit entsprechenden Dichtflächen des Verschlußteils 3 zusammenwirken. Außerdem sind in das Gehäuse 1 Führungsleisten 8 eingefügt, die die Führungsleisten 6 des Verschlußteilhalters 5 umschließen. Die Führungsleisten 8 sind lösbar angeordnet, so daß sie bei Beschädigungen oder bei Verschleiß ausgetauscht werden können.

In ihrem dem Gehäuse 1 zugewandten Bereich besitzen die Führungsleisten 8 eine Kontur, die von einer entsprechenden Kontur des Gehäuses 1 formschlüssig aufgenommen wird. Ein Verdrehen der Führungsleisten 8 um die Achse des Gehäuses 1 wird dadurch verhindert. Im übrigen sind in der Haube 2 Ausnehmungen vorgesehen, die Fortsätze 9 der Führungsleisten 8 formschiüssig aufnehmen. Eine Verschiebung der Führungsleisten 8 parallel zur Spindel 4 wird vermieden, indem die Führungsleisten 8 einerseits auf dem Ende der sie im Gehäuse 1 aufnehmenden Nut aufliegen, während andererseits die Haube 2 auf ihnen aufliegt.

Die rein formschlüssige Halterung der Führungsleisten 8 bringt es mit sich, daß die Führungsleisten 8 nach Entfernung der Haube 2 schnell und leicht ausgewechselt werden können.

Die in den Fig. 1 bis 3 rechts der Gehäuseachse dargestellte Ausführung ist ähnlich geartet wie die vorstehend beschriebene Ausführung. Ihre Besonderheit besteht darin, daß ihre Führungsleisten 10 in erster Linie von Sitzringen 11 gehaltert werden. Außerdem erfolgt eine Halterung durch die Haube 2, die an den Führungsleisten 10 angebrachte Fortsätze 12 formschlüssig aufnimmt. Die Führungsleisten 10 liegen auf dem Boden des Gehäuses 1 auf, so daß auch hier eine Verschiebung parallel zur Spindel 4 vermieden wird.

Die Führung des Abschlußkörpers erfolgt bei dieser Ausführung in der gleichen Weise wie bei der zuerst geschilderten Ausführung. Ein Austausch der Führungsleisten 10, die hier ebenfalls nur durch Formschluß gehaltert werden, ist grundsätzlich in der gleichen Weise vorzunehmen wie bei der in den Fig. 1-3 links dargestellten Ausführung.

Die in der Zeichnung dargestellten Ausführungsbeispiele verfügen beide über einen beidseitig dichtenden Abschlußkörper, der jeweils mit zwei Sitzringen zusammenwirkt. Die Erfindung läßt sich ebenso bei Absperrschiebern anwenden, bei denen eine einseitige Abdichtung eines Abschlußkörpers mit einem Sitzring erfolgt. Auch bei einer solchen Ausführung lassen sich die Führungsleisten wahlweise im Gehäuse, im Sitzring und in der Haube haltern. Wenn eine platzsparende Halterung verwirklicht werden soll, so kann in dem Gehäuse gegenüber dem Sitzring ein Gehäusering vorgesehen werden, der die Führungsleisten formschlüssig aufnimmt.

Der in der Fig. 4 dargestellte Vergleich macht deutlich, daß durch die erfindungsgemäße Gestaltung mit austauschbaren Führungsleisten gegenüber der vorbekannten Ausführung mit einem die Führungsleisten tragenden Rohrteil Material und Platz eingespart werden.

Die linke Hälfte der Fig. 4 zeigt die vorbekannte, die rechte Hälfte die erfindungsgemäße Ausführung. In beiden Ausführungen werden die gleichen Verschlußteile 3 und Sitzringe 7 verwendet, so daß die beiden Absperrschieber die gleiche Charakteristik besitzen. Da bei der vorbekannten Ausführung die gehäuseseitige Führung des Abschlußkörpers von einem Rohrteil 13 übernommen wird, muß bei gleichbleibender Wandstärke die Breite des Gehäuses 14 um ein Maß 15 vergrößert werden. Ebenso muß der Verschlußteilhalter 16, dessen Führungsleiste 17 mit der Führung des Rohrteils 13 zusammenwirkt, verbreitert werden.

## Patentansprüche

1. Absperrschieber mit einem Gehäuse (1) und einer Haube (2) sowie einem in dem Gehäuse (1) verschiebbar angeordneten Abschlußkörper (3, 5), welcher eine oder zwei Dichtflächen trägt, die jeweils auf einem im Gehäuse (1) befindlichen Sitzring (7; 11) zur dichtenden Anlage zu bringen sind, wobei der Abschlußkörper (3, 5) zwei seitliche Führungsleisten (6) besitzt, welche mit entsprechend gestalteten, separat ausgebildeten, innerhalb des Gehäuses (1) formschlüssig gehalterten Führungsleisten (8, 10) in der Weise zusammenwirken, daß eine über den gesamten Verstellweg des Abschlußkörpers (3, 5) erfolgende gleitende Führung und eine Abstützung des Abschlußkörpers (3, 5) gegeben ist, wobei eine zusätzliche Halterung der Führungsleisten (8, 10) des Gehäuses mittels der Haube (2) erfolgt, **dadurch gekennzeichnet, daß** die Führungsleisten (8, 10) des Gehäuses jeweils von einer Kontur des Gehäuses (1) und/oder des Sitzringes (7; 11) formschlüssig aufgenommen werden, die - in Durchflußrichtung des Absperrschiebers betrachtet - vor bzw. hinter dem Abschlußkörper (3, 5) vorgesehen ist.

2. Absperrschieber nach Anspruch 1, **dadurch gekennzeichnet, daß** die Konturgebung der miteinander verbundenen Teile (1, 8; 10, 11) dem System von Nut und Feder entspricht.

3. Absperrschieber nach einem der Ansprüche 1 oder 2, **dadurch gekennzeichnet, daß** jede Führungsleiste (8, 10) jeweils mit einem ihrer Halterung in der Haube (2) dienenden Fortsatz (9, 12) ausgestattet ist.

4. Absperrschieber nach einem der Ansprüche 1 bis 3, **dadurch gekennzeichnet, daß** jede Führungsleiste (8, 10) oder ihr Fortsatz (9, 12) jeweils in einer Ausnehmung der Haube (2) formschlüssig angeordnet ist.

5. Absperrschieber nach einem der Ansprüche 1 bis 4, **dadurch gekennzeichnet, daß** jede formschlüssig mit einem Sitzring (11) oder einem Gehäusering verbundene Führungsleiste (10) gleichzeitig der Halterung des austauschbar In das Gehäuse (1) eingesetzten Sitzringes (11) oder Gehäuseringes dient.

## Claims

1. Stop valve having housing (1) and a hood (2) and also a closing body (3, 5) which is arranged displaceably in the housing (1) and bears one or two sealing surfaces which are each to be brought into sealing contact on a seat ring (7; 11) situated in the housing (1), the closing body (3, 5) having two lateral guide strips (6) which interact with correspondingly designed, separately formed guide strips (8, 10) secured in a form-fitting manner within the housing (1), to the effect that a sliding guide, which is effective over the entire displacement path of the closing body (3, 5), and support of the closing body (3, 5) are provided, the guide strips (8, 10) of the housing additionally being secured by means of the hood (2), **characterized in that** the guide strips (8, 10) of the housing are in each case held in a form-fitting manner by a contour of the housing (1) and/or of the seat ring (7, 11), which contour - as viewed in the direction of flow through the stop valve - is provided upstream or downstream of the closing body (3, 5).

2. Stop valve according to Claim 1, **characterized in that** the contour shaping of the parts (1, 8; 10, 11) which are connected to one another corresponds to the tongue and groove system.

3. Stop valve according to either of Claims 1 and 2, **characterized in that** each guide strip (8, 10) is in each case provided with an extension (9, 12) serving to secure it in the hood (2).

4. Stop valve according to one of Claims 1 to 3, **characterized in that** each guide strip (8, 10) or its extension (9, 12) is in each case arranged in a form-fitting manner in a recess in the hood (2).

5. Stop valve according to one of Claims 1 to 4, **characterized in that** each guide strip (10) connected in a form-fitting manner to a seat ring (11) or a housing ring serves at the same time for securing the seat ring (11) or housing ring, which is inserted into the housing (1) in a manner enabling it to be interchanged.

## Revendications

1. Robinet-vanne comprenant un boîtier (1) et une calotte (2) ainsi qu'un corps de fermeture (3, 5) disposé de manière déplaçable dans le boîtier (1), lequel porte une ou deux surfaces d'étanchéité qui doivent venir en butée chacune hermétiquement sur un anneau de siège (7 ; 11) se trouvant dans le boîtier (1), le corps de fermeture (3, 5) possédant deux nervures de guidage latérales (6) qui coopèrent avec des nervures de guidage (8, 10) configurées de manière correspondante, réalisées séparément, maintenues par engagement positif à l'intérieur du boîtier (1), de telle sorte qu'un guidage par glissement s'effectuant sur toute la course de déplacement du corps de fermeture (3, 5) et qu'un support du corps de fermeture (3, 5) soient donnés, une fixation supplémentaire des nervures de guidage (8, 10) du boîtier s'effectuant au moyen de la calotte (2), **caractérisé en ce que** les nervures de guidage (8, 10) du boîtier sont reçues par engagement positif à chaque fois par un contour du boîtier (1) et/ou de l'anneau de siège (7 ; 11), qui est prévu - vu dans la direction d'écoulement du robinet-vanne - devant ou derrière le corps de fermeture (3, 5).

2. Robinet-vanne selon la revendication 1, **caractérisé en ce que** le contour des pièces connectées les unes aux autres (1, 8 ; 10, 11) correspond au système de rainure et ressort.

3. Robinet-vanne selon l'une quelconque des revendications 1 ou 2, **caractérisé en ce que** chaque nervure de guidage (8, 10) est équipée à chaque fois d'une saillie (9, 12) servant à sa fixation dans la calotte (2).

4. Robinet-vanne selon l'une quelconque des revendications 1 à 3, **caractérisé en ce que** chaque nervure de guidage (8, 10) ou sa saillie (9, 12) est disposée par engagement positif à chaque fois dans un évidement de la calotte (2).

5. Robinet-vanne selon l'une quelconque des revendications 1 à 4, **caractérisé en ce que** chaque nervure de guidage (10) connectée par engagement positif à un anneau de siège (11) ou un anneau de boîtier sert en même temps à la fixation de l'anneau de siège (11) ou de l'anneau de boîtier inséré de manière remplaçable dans le boîtier (1).
